(19) Europäisches Patentamt
European Patent Office
Office européen des brevets

(11) **EP 4 084 530 A1**

(12) **EUROPEAN PATENT APPLICATION**

(43) Date of publication:
**02.11.2022 Bulletin 2022/44**

(21) Application number: **21171430.8**

(22) Date of filing: **30.04.2021**

(51) International Patent Classification (IPC):
*H04W 36/32* (2009.01)    *H04W 28/26* (2009.01)
*H04W 40/20* (2009.01)    *H04W 84/04* (2009.01)
*H04W 40/22* (2009.01)    *H04L 29/08* (2006.01)
*H04W 28/14* (2009.01)

(52) Cooperative Patent Classification (CPC):
**H04W 28/26; H04L 67/568; H04W 40/20;**
H04W 28/14; H04W 36/32; H04W 40/22;
H04W 84/047

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventor: **The designation of the inventor has not
yet been filed**

(74) Representative: **Philips Intellectual Property &
Standards
High Tech Campus 52
5656 AG Eindhoven (NL)**

(54) **SYSTEM AND METHOD FOR EFFICIENT UPLOAD OR DOWNLOAD OF TRANSMISSION DATA
OVER MOBILE ACCESS DEVICES**

(57)    The invention proposes an improved provision of download capability for terminal devices (e.g. smart phones or IoT devices) in a network system by introducing a capability of caching requested data at mobile access devices (e.g. base stations (such as gNBs) or access points) and optimizing scheduling/transfer of data between terminal device and mobile access device and between mobile access device and macro access device.

**Fig. 1**

EP 4 084 530 A1

**Description**

FIELD OF THE INVENTION

The invention relates to data distribution in wireless networks including mobile access devices, such as - but not limited to - cellular networks.

BACKGROUND OF THE INVENTION

Small cell technology is a new development in cellular networks of the fifth generation (5G networks), but small cells aren't the only access devices (i.e. base stations or node Bs) that will provide network connectivity. 5G networks also use macro cells -- such as cell towers -- for connectivity, and these larger base stations may enable lower 5G frequencies, compared to small cell's high-frequency millimeter wave capabilities.

A macro cell may be a cellular base station that sends and receives radio signals through large towers and antennas to provide cellular coverage in a km range, while a small cell is another type of cellular base station that is physically small to boost wireless network connectivity in specific areas with high-speed broadband connectivity. Moreover, a femtocell may be a wireless access point used to enhance indoor cellular connectivity. Unlike other cellular connectivity options, femtocells connect back through the internet to provide inhome or office cellular connectivity. Femtocells look and operate like routers, and users can place femtocells near their current network hardware setups. Femtocells are accessible to anyone who wants to purchase one.

In some situations, terminal devices (such as mobile user devices (e.g. mobile phones such as user equipment (UE), smartphones, laptops, notebooks, tablets etc.) or Internet of Things (IoT) devices (e.g. sensors or the like) might have high bandwidth needs, e.g., due to a required download of a big data file. Retrieving such a big data file may however cause problems while being connected to a macro cell of a cellular network if the macro cell can provide limited connectivity only, or if a terminal device has to get connected to a mobile relay (e.g. mobile cellular access device such as a gNodeB (gNB) in 5G networks) first and can only then trigger the download of a file since the mobile relay might be able to provide good/fast connectivity for a very limited amount of time.

An exemplary use case may be a UE that is connected to the cellular network through a macro cell and requires some bandwidth needs that cannot be fully handled by the current macro cell. For instance, a medical user might be having a video conference and also requesting the download of a big genomic file, or a travelling user is trying to retrieve some videos, but the current connectivity through the macro cell does not support the connection.

SUMMARY OF THE INVENTION

It is an object of the present invention to enable improved data distribution in wireless networks.

This object is achieved by an apparatus as claimed in claim 1, by a wireless communication system as claimed in claim 6, by a terminal device as claimed in claim 14, by a method as claimed in claim 15, and by a computer program product.

According to a first aspect related to a core network device or function (e.g. AMF, SMF or IAB coordinator) or a terminal device (target device) of the wireless network, an apparatus for controlling upload or download of transmission data in a wireless network is provided, wherein the apparatus is configured to:

- select a mobile access device based on estimated location information of the mobile access device and location information of a target device;
- initiate caching of the transmission data at the selected mobile access device; and
- schedule a transfer of the transmission data to the mobile access device and a subsequent transfer of the cached transmission data from the mobile access device to the target device or to a core network of the wireless network based on the estimated location information of the mobile access device and the location information of the target device.

According to a second aspect related to the core network device or function or the terminal device (target device), a method of controlling upload or download of transmission data in a wireless network is provided, wherein the method comprises:

- selecting a mobile access device based on estimated location information of the mobile access device and location information of a target device;

- initiating caching of the transmission data at the selected mobile access device; and

- scheduling a transfer of the transmission data to the mobile access device and a subsequent transfer of the cached requested data from the mobile access device to the target device or to a core network of the wireless network based on the estimated location information of the mobile access device and the location information of the target device.

According to a third aspect, a wireless communication system is provided, which comprises an apparatus of the first aspect and at least one mobile access device.

According to a fourth aspect, a terminal device (e.g. wireless communication device (UE) or IoT device is provided, which comprises an apparatus of the first aspect.

Finally, according to a fifth aspect, a computer program product is provided, which comprises code means for producing the steps of the above method of the second aspect when run on a computer device.

Accordingly, better upload or download capability for target devices (e.g. terminal devices, IoT devices etc.) can be achieved by using the mobile access device between the target device and a donor access device to optimize at least one of mobility and network topology, transfer of data e.g. by caching requested data at the mobile access device and allocating communication parameters between the target device and the mobile access device and/or between the mobile access device and the macro access device. The donor access device might be a macro cell or any other cell, e.g., pico/femto/small cell, stationary or mobile, capable of providing connectivity to the mobile access device.

As the above optimization is based on positioning information of the mobile access device, the communication can be prepared in advance in such a way that data communication is not affected, the upload or download of a related file is put on hold in the macro cell e.g. since it is currently overloaded, the mobile access device starts caching the upload or download of the requested data, and the target and mobile access devices can be made aware of their positions/trajectories to adapt and plan their radio access network (RAN) communication settings.

According to a first option which may be combined with any of the above first to fifth aspects, the requested data may be uploaded or downloaded via a macro access device when the mobile access device is in a predetermined range of the macro access device. Thereby, it can be assured that the transmission data is transferred over a short distance to achieve an improved connectivity.

According to a second option which may be combined with the first option or any of the above first to fifth aspects, the transmission data may be a data file to be uploaded or downloaded, a data stream from a streaming service, or a software update. Thus, large amounts of data can be transferred more effectively to or from the target device via the mobile access device.

According to a third option which can be combined with the first or second option or any of the above first to fifth aspects, it may be determined which of a plurality of mobile access devices will be in a predetermined range of the target device taking into account current traveling schedules of the mobile access devices and it may be identified which of the plurality of mobile access devices can deliver the transmission data to the target device taking into account the position information of the target device at a predetermined time, the positions of each of the plurality of mobile access devices at the predetermined time, and communication requirements of a user of the target device at the predetermined time. Thereby, a best suited mobile device can be selected for effective transfer of the transmission data.

According to a fourth option which can be combined with any of the first to third options or any of the above first to fifth aspects, the selected mobile access device may be informed about at least one of a presence of the target device along a route of the mobile access device, data requirements of the user of the target device, and a position of the target device, so that the selected mobile access device can pre-optimize transmission parameters or pre-allocate transmission resources. Thereby, effective transfer of the transmission data can be ensured at the mobile access device.

According to a fifth option which can be combined with any of the first to fourth options or any of the above first to fifth aspects, the target device may be informed through a macro cell about the timing when the mobile access device will be in reach and available for upload or download of the transmission data. Thus, the target device is enabled to prepare an effective transfer of the transmission data.

According to a sixth option which can be combined with any of the first to fifth options or any of the above first to fifth aspects, a suitable location of the mobile access device for the transfer of the transmission data and a suitable starting time for the uplink or downlink communication between the selected mobile access device and a macro access device serving the target device are selected. Thereby, effective scheduling of the transfer(s) of the transmission data can be achieved.

According to a seventh option which can be combined with any of the first to sixth options or any of the above first to fifth aspects, the transmission data may be transferred through two or more mobile access devices if a single mobile access device is not able to handle all the transmission data.

According to an eighth option which can be combined with any of the first to seventh options or any of the above first to fifth aspects, the mobile access device may be a vehicle-mounted access device configured to serve terminal devices located in the vehicle or in a predetermined range of the vehicle. Thereby, a plurality of mobile access devices can be provided on public transportation vehicles with predetermined travelling routes and schedules to facilitate effective scheduling of the transfer of the transmission data and provide enhanced connectivity.

According to a ninth option which can be combined with any of the first to eighth options or any of the above first to fifth aspects, the mobile access device may comprise an intermediate user plane function (I-UPF) or a local application function (AF) or is configured to host of an edge computing application or an edge application server. This measure provides the advantage that the transfer of the transmission data from the data source to the mobile access device can be made more effective.

According to a tenth option which can be combined with any of the first to ninth options or any of the above first to fifth aspects, the mobile access device may be configured to pre-allocate and configure communication resources for the upload or download of the transmission data taking into account at least one of a required amount of data to transfer, the position information of the target device, an expected trajectory of the mobile access device and an expected time period during which the target device or a macro access device and the mobile access device will be in a predetermined range. Thereby, the transfer of the transmission data can be optimized at the mobile access device.

According to an eleventh option which can be combined with any of the first to tenth options or any of the above first to fifth aspects, a core network function may be configured to trigger a request for a conditional handover to the mobile access device once the mobile access device has been selected, or the target device may be configured to send a radio resource control measurement report triggering the conditional handover request, or the target device may be configured to send a request to trigger the conditional handover directly to a core network of the wireless network, or the target device may be configured to join the mobile access device if it fulfils predetermined conditions. Thereby, the data transfer via the mobile access device can be effectively initiated by a handover operation.

According to a twelfth option which can be combined with any of the first to eleventh options or any of the above first to fifth aspects, the mobile access device and a macro access device serving the target device may be instances of a split between a central unit and a distributed unit, wherein the mobile access device is a distributed unit and the macro access device is a central unit, wherein the central unit is configured to send to the target device a connection reconfiguration message including timing and conditions for moving from a source distributed unit to a target distributed unit, wherein the target device is configured to include information about a data delivery status in a random-access procedure and/or a connection reconfiguration complete message, and wherein the transmission data is cached at the target distributed unit. These measures facilitate handover-based data transfer via mobile access devices.

According to a thirteenth option which can be combined with any of the first to twelfth options or any of the above first to fifth aspects, an integrated access and backhaul (IAB) donor unit may be provided, that is configured to create communication parameters in dependence on an estimated mobility information of the mobile access device, to activate the communication parameters when the mobile access device is in a predetermined range of the IAB donor unit, and to put the communication parameters on hold when the mobile access device is out of range of the IAB donor unit. Thereby, it can be ensured that proper communication parameters are readily available when the transmission data is to be transferred.

According to a fourteenth option which can be combined with any of the first to thirteenth options or any of the above first to fifth aspects, the transmission data may be distributed in a mobile edge or multi-access edge computing (MEC) environment, wherein an MEC orchestrator of a core network of the wireless network may be configured to select the mobile access device for delivering the transmission data to the target device, wherein an MEC application is first commissioned at the selected mobile access device and the transmission data is transferred upon request of the MEC orchestrator based on an application request from the target device. This ensures effective transfer of the transmission data from an application to the target device via the selected mobile access device.

According to a fifteenth option which can be combined with any of the first to fourteenth options or any of the above first to fifth aspects, a macro access device serving the target device may be configured to collect positioning information of the mobile access device during a learning phase and to use the collected positioning information during a prediction phase to estimate an actual position of the mobile access device. Thereby, an effective scheduling of the transfer of the transmission data and an improved connectivity during the transfer can be achieved.

According to a sixteenth option which can be combined with any of the first to fifteenth options or any of the above first to fifth aspects, the terminal device of the fourth aspect may be configured to decide whether to connect to the mobile access device based on at least one of the location information and the estimated location information.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the wireless communication system of claim 6, the terminal device of claim 14, the method of claim 15, and the computer program product may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically shows an architecture of a cellular network in which the present invention can be implemented;

Fig. 2 schematically shows an example according to an embodiment of a planned data download to an off-board terminal device from a mobile base station;

Fig. 3 schematically shows a signaling and processing diagram for the planned data download of the example of Fig. 2;

Fig. 4 schematically shows a signaling and processing diagram for a data distribution in a mobile edge computing (MEC) environment according to an embodiment;

Fig. 5 schematically shows a block diagram of an exemplary instantiation of a mobile base station and overall system according to various embodiments;

Fig. 6 schematically shows a signaling and processing diagram for an example according to an embodiment where a downlink data is cached at a mobile base station until it can be delivered;

Fig. 7 schematically shows a flow diagram of a first responder network localization and mapping procedure according to various embodiments;

Fig. 8 shows characteristic curves of downlink throughput between macro and mobile base stations vs. location based on historical data; and

Fig. 9 shows characteristic curves of downlink throughput between two mobile base stations and a terminal device vs. location based on historical data.

DETAILED DESCRIPTION OF EMBODIMENTS

Embodiments of the present invention are now described based on a 5G cellular network environment.

Throughout the present disclosure, the abbreviation "gNB" (5G terminology) is intended to mean access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

It is noted that throughout the present disclosure only those blocks, components and/or devices that are relevant for the proposed data distribution function are shown in the accompanying drawings. Other blocks have been omitted for reasons of brevity.

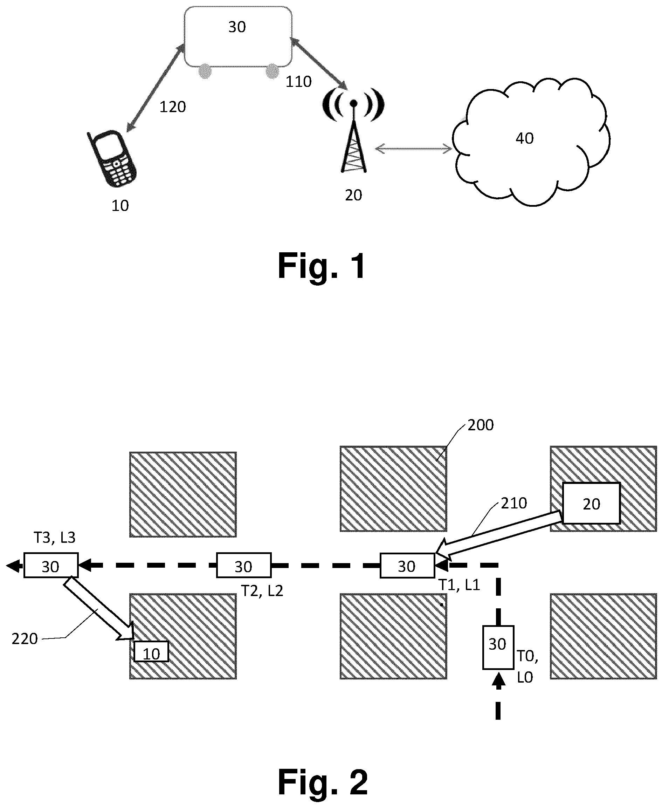

Fig. 1 schematically shows an architecture of a cellular network in which the present invention can be implemented.

In the architecture of Fig. 1, a mobile access device 30 is provided for relaying data between a donor access device (e.g. gNB) 20 (i.e. macro access device) and a terminal device (e.g. wireless communication device such as a UE) 10. The donor access device 20 provides connectivity to a 5G core network 40.

In an example, the mobile access device 30 may be a vehicle-mounted relay which can be defined as a mobile base station that serves terminal devices (e.g. UEs) that are in the vehicle or close to the vehicle. The vehicle-mounted relay might also host and implement some network functions to deliver the communication services mentioned in various embodiments.

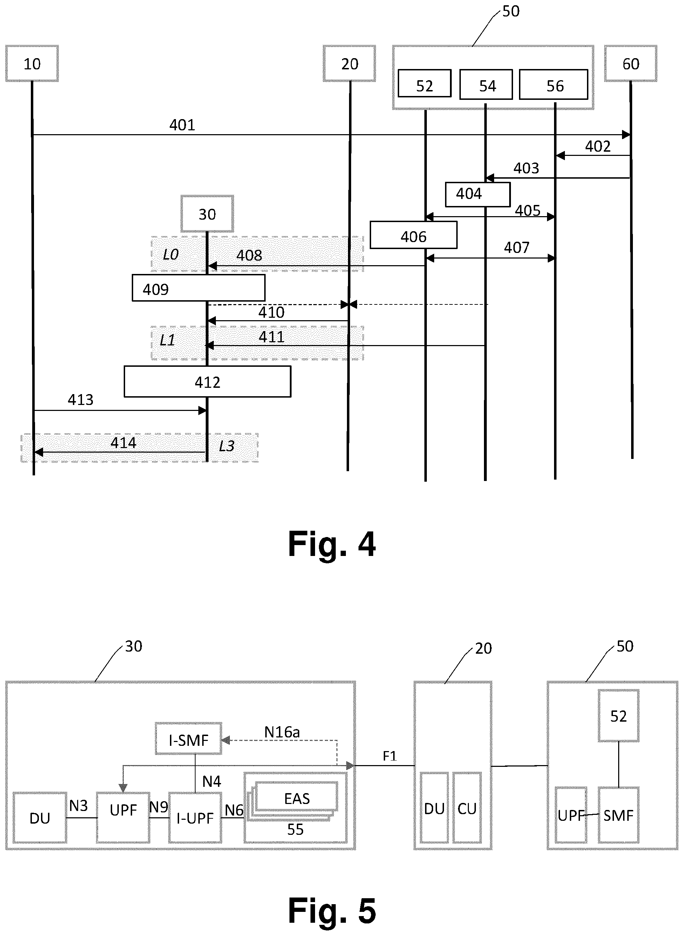

The mobile access device 30 may be connectable through a first wireless link 110 to the donor access device 20 and through a second wireless link 120 to the terminal device 10 (e.g. as described in Figure 4-1 of 3GPP specification TR_22839).

It is noted that functionalities of the mobile access device 30 to realize use cases of the following embodiments may go beyond the functionalities implemented in a conventional static access device (e.g. gNBs). In particular, the mobile access device 30 may require implementation of some network functions such as an intermediate user plane function (I-UPF) or a local application function (AF). It might also require hosting of an edge computing application or an edge application server.

According to various embodiments, use cases and protocol flows are described, in which 5G systems or other wireless networks deliver better download capability for terminal devices. This can be achieved by using the mobile access device 30 between the terminal device 10 and the macro (donor) access device 20 to optimize at least one of mobility and network topology, transfer of data by caching it at the mobile access device 30, and allocation of communication parameters between the terminal device 10 and the mobile access device 30 and/or between the mobile access device 30 and the macro access device 20.

Where the above optimization is based on positioning information of the mobile access device 30, the communication may be prepared in advance in such a way that data communication (e.g. video call) is not affected, the download of a related file is put on hold in the macro cell since it is currently overloaded, the mobile access device (relay station) 30 starts caching the download of the requested data by the terminal device 10, and the terminal device 10 and mobile access device 30 are made aware of their positions/trajectories to adapt and plan their radio access network (RAN) communication settings.

In examples, data downloads may be coordinated over mobile base stations to improve communication performance in wireless networks such as 5G. To achieve this, a RAN protocol may be adapted for optimized mobility, which may include handover protocols or modifications in an integrated access and backhaul (IAB) e.g. for multi-hop backhauling based on a mobility pattern of the mobile access device 30.

In other examples, protocols for planned data downloads may include a dynamic setup of an edge server or data caching at the mobile access device 30.

In further examples, RAN connectivity between the terminal device 10 e.g., a static terminal device, and the mobile access device 30 and/or between the mobile access device 30 and its macro cell may be optimized based on knowledge of the positioning information of the mobile access device 30.

In still further examples, vehicles with onboard base stations, so called mobile base stations (MBS), may be configured to act as relays and help provide efficient data delivery. This use case addresses the needs of users who are not moving with the mobile base station but can benefit from connectivity offered by an MBS when users and mobile base stations are close by. In particular, this use case addresses the needs of those terminal devices (e.g. UEs) that either have limited connectivity (e.g., when connected to a macro cell) or that have too demanding bandwidth needs.

Fig. 2 schematically shows an example of a planned data download to an off-board terminal device from a mobile base station.

In Fig. 2, a city environment where each hatched square corresponds to a block 200 of houses. A fixed gNB 20 acts as donor gNB and a UE 10 is shown two blocks away from the donor gNB 20 in a position with bad connectivity. Furthermore, a mobile gNB 30 and its route (bold dotted arrow) is shown. The route includes locations L0 to L3 at times T0 to T3. At location L1 and time T1, the mobile gNB 30 receives a first data transfer 210 from the donor gNB 20 that is "relayed" to the UE 10 at location L3 at time T3 by a second data transfer 220 to the UE 10.

For instance, a user, Tom, is waiting for bus number 23. While doing so, Tom is watching his preferred series of a video streaming service via his UE 10. He is also having a call with a friend. However, Tom's network connectivity at his current location is insufficient, in particular, to handle the video streaming service, since the donor gNB 20 is far away from his UE 10. In this example, it is beneficial if the UE 10 can request the download of the series and schedule their delivery through a suitable mobile relay in the vicinity of the user, e.g., bus number 45 that is arriving at the bus stop in a few instants. The data transfer 220 from bus number 45 with mobile base station (gNB) 30 to UE 10 is performed at time T3 and location L3.

The above example may require as pre-conditions that the mobile network operator (MNO) operates mobile base stations and macro cells in a city, the user, Tom, has a UE and is subscribed to the MNO, is connected to a macro base station (not shown in Fig. 2) and needs to retrieve certain files (e.g., a movie or websites).

The proposed data transfers 210 and 220 may involve the following service flows:

- The UE 10 of the user is connected to the (5G) macro network;
- the (5G) macro network is capable of delivering his normal communication needs, in particular, low latency and low bandwidth communication needs but offers limited capacity for the download of large amounts of data due to spotty coverage and a high number of UEs;
- the MNO operates mobile base stations that offer extra additional capacity and the mobile network determines that the download needs of our user Tom can be fulfilled by mobile base station (gNB) 30, bus number 45, approaching Tom's location;
- the 5G system caches Tom's required downlink traffic at the mobile base station (gNB) 30 that is approaching Tom's location, wherein downloading of this data to the mobile base station (gNB) 30 can be done very fast since this is done at time T1 and location L1 when the mobile base station (gNB) 30 is very close to the macro base station (gNB) 20;
- when the mobile base station (gNB) 30 is then close to Tom's UE 10 at time T3 and location L3, the UE 10 connects to the mobile base station (gNB) 30 and the UE 10 rapidly receives all requested data; and
- when the mobile base station (gNB) 30 moves away, Tom's UE 10 releases its connection with the mobile base station (gNB) 30.

As a result, the user can enjoy a fast downlink connection and retrieve all his required files without affecting his call.

To achieve this, the cellular (5G) system provides at least one of a means to schedule and cache data download at mobile base stations, a means to optimize mobility between macro and mobile base stations required to deliver fast data download, and a means to plan and optimize RAN communication between a terminal device (e.g. UE) and a mobile base station before the terminal device and the mobile base station are connected.

In another example, a user, Tom, is an emergency physician who just arrived at a car accident. Tom is attending several injured persons. Tom is having a call with other clinicians at a close-by hospital discussing the health state of the patients and to which hospital the patients should be transferred. Tom would also like to retrieve the Electronic Health Record of the patients to do a better assessment. However, the network connectivity at his current location - the accident area -- is insufficient, in particular, to download some bulkier files in the EHR of the patients. In this situation, it is beneficial if Tom's UE could schedule the download of the EHR. This could be done by means of a relay mounted on one of the ambulances that are already approaching the accident area. This example can also be illustrated by means of Fig. 2. At location L0 and time T0 the EHR data transfer is requested by the UE. The mobile base station, an ambulance-mounted relay (AMR), receives the EHR data from the macro cell at location L1 and time T1. The AMR caches this EHR data. When the AMR is at location L3 at time T3, the AMR can rapidly deliver the requested EHR data to Tom's UE. In an alternative example, the terminal device may be an IoT device requiring delivery of a software update. Some IoT devices might lack continuous connectivity to the macro cell, but the IoT devices might be able to retrieve the software update from the mobile base station (gNB), when it is close by. In an alternative example, the mobile base station may be an unmanned aerial vehicle (UAV) or a satellite.

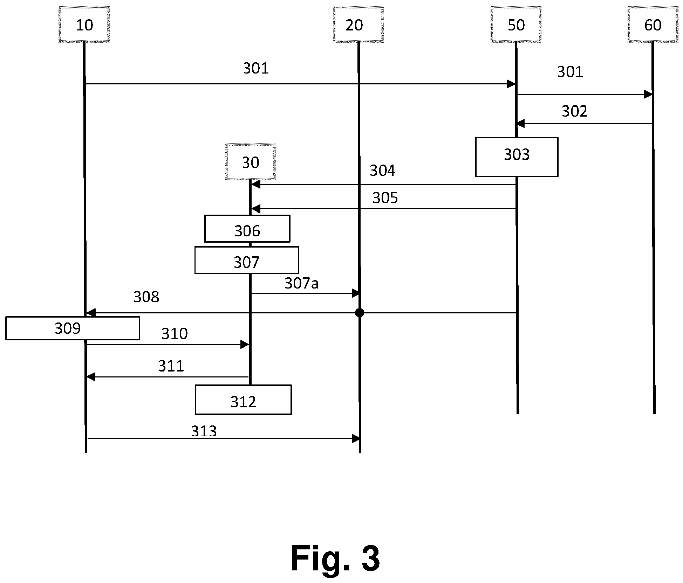

Fig. 3 schematically shows a signaling and processing diagram for the planned data download of the example shown in Fig. 2. Involved devices are a UE 10, a macro base station (gNB) 20, a CN 50, a domain name server (DN) 60 and a mobile base station (gNB) 30.

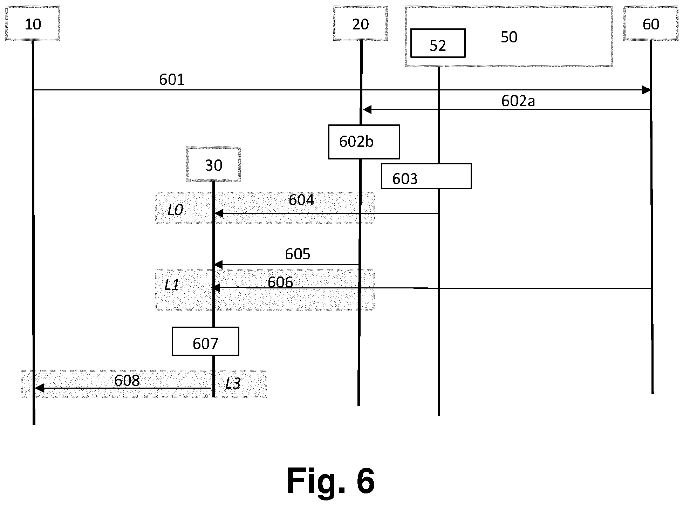

In the signaling and processing sequence of Fig. 3 and the signaling and processing sequences of subsequent Figs. 4 and 6, the vertical direction from the top to the bottom corresponds to the time axis, so that messages or processing steps shown above other messages or processing steps occur at an earlier time.

In step 301, the UE 10 announces bandwidth/processing needs. This can be notified to the CN 50 or the UE 10 might notify a third-party application at a given data network. For instance, the UE 10 can announce that it requires the download of a specific data file. This information can be extracted from high application layers or the request can be provided directly to the application provider. For instance, if the user is willing to watch a 2h-long movie in a streaming service (e.g. a content platform (CP)) the UE 10 can expect that the whole data file will need to be streamed in the next 2 hours. This is data that needs to be delivered from the streaming service through the mobile network (i.e. CN 50 and RAN).

It is noted that the CN 50, DN 60 and streaming application can also predict the behavior of the user and his needs. For instance, if a user watches an episode of a television (TV) series every evening, the DN 60 can identify the communication needs of the user. This might also apply to users who commute, since some of those users usually consume some data resources in a predictable way, e.g., watch such TV series during their commuting times and communication needs can thus be predicted based on their commuting behavior. If the DN 60 knows the requirements of the user and the CN 50 is aware of the mobility pattern of the user, then the cooperation between the DN 60 and the CN 50 can allow placing the requested resources at the right place and time so that the user can efficiently consume them.

In step 302, the DN 60 makes a request for the CN 50 to allocate resources for delivery of the data to the UE 10. This can be an action taken on demand for a specific user and data request. Alternatively, this can be an initial configuration step in which the DN 60 and CN 50 agree to deliver data to users in an optimized manner. Based on this agreement, the CN 50 can allocate resources and move the application/data in such a way that it is efficiently delivered to the end user.

In step 303, the CN 50 knows the route of mobile base stations as well as the location of the user and his macro cell. The CN 50 plans which of the mobile base stations will be in close vicinity of the user taking into account their current schedules. Based thereon, the CN 50 can identify which mobile base station can deliver which load to which UE taking into account at least one of the positions of each UE at time t, the positions of each mobile base station at time t, and the communication requirements of a user at time t.

A simple exemplary strategy may consist in checking which mobile base station is going to be close to the UE 10 next, and whether the available communication link between the UE 10 and a potential mobile base station will be enough to handle the communication requirements of the UE 10. The available communication link refers to the available communication resources when the UE 10 and the potential mobile base station encounter taking into account the distance and expected duration of the communication link.

In step 304, the CN 50 informs a chosen mobile base station 30 about a presence of a user along the route of the mobile base station 30, data requirements of the user of the UE 10, and/or the position of the UE 10, so that the mobile base station 30 can pre-optimize transmission parameters, e.g., beamforming or frequency or pre-allocate transmission resources.

In step 305, the CN 50 allocates resources at the mobile base station 30, e.g., triggered by the DN request. These resources can be storage resources to cache the data transfer or communication resources to perform the data transfer. The CN 50 starts a local download of the resources required by the user to the mobile base station 30 (e.g. caching, as in a content delivery network).

In step 306, data caching is performed at the mobile base station 30.

In step 307, the mobile base station 30 pre-allocates and configures communication resources for the transmission of the requested data taking into account at least one of the required amount of data to transfer, the known position of the user, the expected trajectory of the mobile base station 30 and expected time during which the UE 10 and the mobile base station 30 will be in a predetermined range.

These communication resources might include coding, timing and frequency resources or beamforming over time. Some of these parameters can be configured in advance since the mobile base station 30 has knowledge of the positioning information of the mobile base station 30 and historical data related to, e.g., a reported channel quality indication (CQI). Parameters such as beamforming can be optimized and pre-configured since the position of the UE 10 known (in some cases, it can be assumed to be static) and the trajectory of the mobile base station 30 may also be known.

In step 307a, for efficiency purposes, the allocation of the communication resources for the mobile base station 30 may be done through the macro cell (i.e. macro base station 20), i.e., before the mobile base station 30 is in the predetermined range and the UE 10 is connected to it, or a handover procedure has even started. Similarly, the UE 10 may be informed of the mobile base station 30 through the macro cell, e.g., in the context of a conditional handover (CHO) including conditions required for joining and leaving the mobile base station.

In step 308, the CN 50 informs the UE 10 - through the macro cell (i.e. macro base station 20) - about the timing when the mobile base station 30 will be in reach and available for delivery. Optionally, the CN 50 may also inform the UE 10 about the physical cell identifier and beam index to use to speed up cell acquisition. As another option, the CN 50 may provide handover parameters and transmission parameters for the mobile base station 30. If system information (e.g. master information block (MIB), system information block 1 (SIB1)) broadcasted by the mobile base station 30 is signed, the CN 50 can provide the UE 10 with this information through the macro cell as well, so that the information can be pre-verified.

In step 309, the UE 10 may schedule the handover in advance. The UE 10 may also receive communication parameters in advance. This may include, e.g., beam forming parameters since the UE 10 is aware of the expected trajectory of the mobile base station 30.

In step 310, when the mobile base station 30 appears according to the schedule, the UE 10 connects to the mobile base station 30. In some circumstances, the UE 10 may also request the required resources (data) again, triggering then the local download from the mobile base station 30. In some circumstances, the data had already been requested, and it will be directly downloaded, as soon as the UE 10 and the mobile base station 30 are connected.

In step 311, once the UE 10 and the mobile base station 30 are connected to each other, data transfer can occur with minimal latency since communication parameters have been preconfigured and the UE 10 is able to download data directly from the mobile base station 30 that has been caching the data when approaching the UE 10.

In step 312 the cached data may be removed at the mobile base station 30.

Finally, in step 313, once the exchange of the bulky data is finished, the UE 10 reconnects to its previous macro cell (i.e. macro base station 20), when the UE 10 has dropped its connection.

It is noted that this embodiment may also be applicable to satellite and unmanned area vehicle (UAV) scenarios, if they are to provide connectivity to terrestrial UEs or UE access points (APs).

Thus, optimized mobility is provided to make sure that data can be transferred fast between a macro cell and a mobile base station and the mobile base station and a terminal device. Optimizing mobility can be achieved at multiple levels within the RAN. One of them refers to the handover procedure. Another option may be a multiple-hop communication UE - mobile base station - macro cell.

Regarding the handover (HO) procedure, this procedure can be optimized by making use of a mobility pattern. The optimized handover procedure that builds on a CHO may be based on at least one of the following options:

a) The request for CHO might not be triggered by the UE but by the CN itself, e.g., access and mobility management function (AMF) or session management function (SMF) in 5G networks, once the CN has determined which mobile base station will be the most suitable one for the data delivery. This might be required since the CN is aware of the route of the mobile base station and can plan the handover.

b) If the UE sends a radio resource control (RRC) measurement report triggering the CHO request, the donor gNB (macro base station) might not be aware of which mobile base station is approaching. To address this issue, the fixed base stations (macro cells) along the route of the mobile base station could be configured with the schedule of the mobile base stations. This can be a one-time configuration step. Similarly, the mobile base stations could be informed about the macro cells accordingly by the CN.

c) Alternative to option b, the macro cell might forward the request from the UE to the CN so that the CN sends input to the macro cell - on demand - about the mobile base stations that might be suitable to handle the connection requested by the UE. This may involve that that the mobile base stations send updates on their route to the CN so that the CN is aware of it.

d) Alternative to option c, the request sent by the UE to trigger CHO might be sent directly to the CN.

e) The RRC reconfiguration message returned by the mobile base station might include at least one of: the fact that it is a mobile base station, the mobile base station's positioning information (over time) so that UE can take this information into account, connection parameters for multiple instants of time due to the changing position of the mobile base station (these connection parameters can be made available if the macro cell informs the mobile base station about the location of the UE), and configured grant parameters for uplink (*ConfiguredGrantConfig* including the parameter *rrc-ConfiguredUplinkGran*) and semi-persistent scheduling (SPS) for downlink based on pre-configured/predicted communication parameters.

f) The RRC reconfiguration may be sent by the mobile base station to the donor gNB (macro base station) when requested by the CN, e.g., AMF.

g) The cell switch conditions delivered to the UE in the CHO configuration message may include at least one of the physical cell identity (PCI) of the mobile base station (gNB) when the mobile base station is close to the UE while considering that the mobile base station might use multiple PCIs to avoid collisions when they are moving, the timing at which the mobile base station is predicted to be in communication range taking into account its positioning information (e.g., current location, speed, acceleration, rotation,...), and the timing at which the mobile base station is predicted to be outside of communication range taking into account its positioning information (e.g., current location and speed).

h) The UE may join a mobile base station if it fulfils the conditions, e.g., if it is going to be in close vicinity long enough and is capable of delivering the required connectivity.

The above proposed options for CHO optimized for vehicle-mounted relays may be applied to other use cases, e.g. as described in 3GPP specification TR 22.839, independently of the main use case described in the embodiments. For instance, this can apply to use cases in which it is desired to optimize the upload of data from the UE towards the CN.

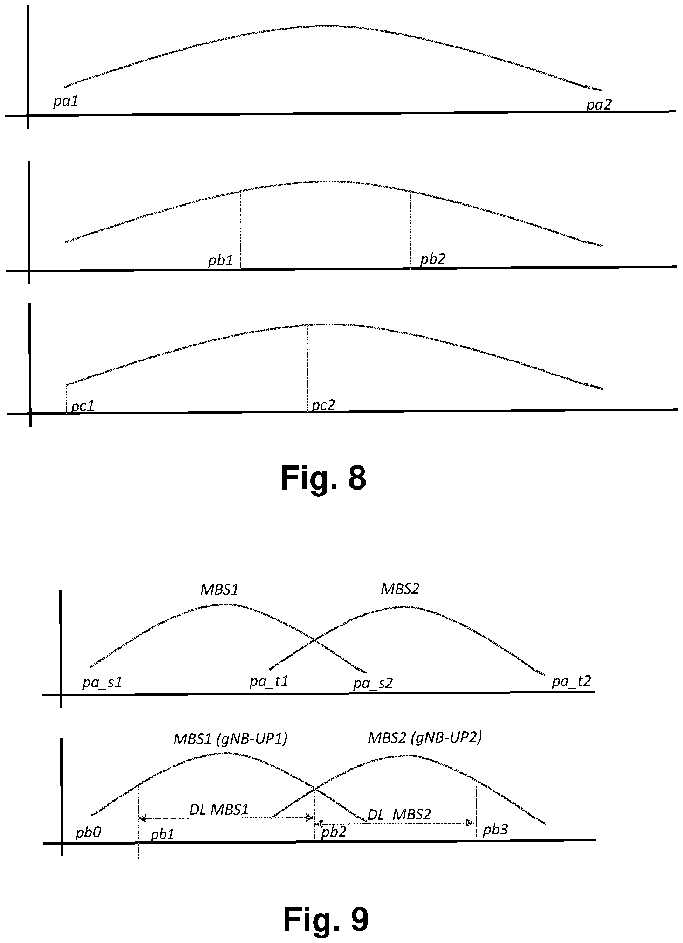

Another option for HO optimization is if the mobile base station (gNB) and the macro base station (gNB) are instances of a split between a central unit (CU) and a distributed unit (DU). In this case, the mobile base station and macro base station may not be two fully independent base stations. The macro base station may include the CU of the mobile base station and a fixed DU. The mobile base station (relay) may be a DU of the macro base station. Then, the optimized handover may refer to a decision of the CU about which DU should be used when delivering a given communication link to a UE. Each DU might support multiple cells and each cell might support multiple beams. In this case, GPRS tunneling protocol user data (GTP-U) tunnels may be used to connect with the user plane function (UPF) through an N3 interface. This handover can be done by means of the DU/CU split architecture as described e.g. in 3GPP TS 38.401 Section 8.2. However, some of those procedures can be optimized for mobile base stations (gNBs) taking into account the positioning information of mobile base stations. As an example, Figure 8.2.1.1-1 in TS 38.401 shows how inter-gNB DU mobility for intra-NR is performed. In this case, the source gNB-DU may report a measurement report from the UE to the CU that will send the request for context setup to the target DU. The target DU may then send a response to acknowledge the setup of the UE context. Then, the CU sends a request to the source DU to modify the UE context. As a consequence, the source DU sends an *RRCConnectionReconfiguration* to the UE and delivers the current status of the downlink data delivery to the CU and confirms the modification of the UE context. Next, the UE can perform a random access procedure with the target DU till the UE sends *RRCConnectionReconfigurationComplete* to the target DU, that will be forwarded to the CU. Simultaneously, the CU may send the downlink user data to the target DU that is delivered to the UE. The target DU can also start receiving uplink user data.

This protocol can benefit from knowledge of the positioning information (location, velocity vector, etc.) of a mobile DU (i.e. the mobile base station) since it can be estimated when a UE is going to send a given measurement report triggering the handover. It can also be predicted which DU is going to be the target gNB. With this knowledge it is possible to improve the data distribution performance as follows:

a) By sending an *RRCConnectionReconfiguration* message from the CU to the UE including the timing and conditions for moving from the source DU to the target DU, the UE can directly perform the random-access procedure with the target DU without having to wait for the *RRCConnectionReconfiguration.*

b) By including information in the random-access procedure and/or *RRCConnectionReconfigurationComplete* message sent by the UE to the target DU about the downlink data delivery status, the target DU can choose the downlink user data to start transmitting.

c) By caching downlink user data at the target DU in advance. The caching of the downlink data might involve collocating the UPF with the gNB since the UPF has the capabilities to buffer downlink data steered by the SMF.

The above proposed capabilities may not only apply not only to the main use case in the above embodiment, but also to other use cases, e.g., as described in 3GPP TR 22.839. For instance, this can apply to use cases in which it is desired to optimize the upload of data from the UE towards the CN.

In other embodiments, integrated access and backhaul (IAB) aspects may be considered for mobility optimization. Section 6.1.3 in 3GPP TS 38.401 describes the IAB architecture. Section 6.1.4 describes the protocol stacks for IAB. From an IAB point of view, the mobile base station can be a DU that connects to a parent DU that plays the role of an IAB donor base station (gNB). A mobile base station might also connect to multiple parent DUs under a same IAB gNB donor or to multiple IAB gNB donors when it changes its position. There are multiple challenges for IAB in the context of mobile relays, one of them is that the IAB communication parameters such as L2 identifiers, IP addresses or routing tables will be less static because of the mobile nature of the mobile base stations. In fact, the current TR 22.839 prefers a limitation in the number of hops to a single hop. But even in this case, if a mobile base station keeps moving, then when it moves out of range of its current parent node and gets close to another base station (potential parent node), the mobile base station may need to register again.

In embodiments, it is determined that a mobile base station will come close to multiple macro base stations or IAB nodes. For mobile base stations following the same route in a periodic manner, or in general, just a known route, an optimization may consist in advertising or communicating that it is such a mobile base station and including its route timing. The IAB donor CU/DU may consider this fact to create communication parameters such as routing information that is dependent on the mobility information of the mobile base station. When the mobile base station is in the vicinity of the IAB donor CU/DU, that communication parameters can be (re-)activated. If the mobile base station is out of range, the communication parameters for the mobile base stations may be put on hold by the IAB donor CU/DU and a different IAB configuration may be applied. This approach can be done at multiple levels. For instance:

- if the mobile base station moves under a different DU controlled by the same gNB-CU, the F1 interface (inter-connection between gNB-CU and gNB-DU) can remain active, and only the backhaul adaptation protocol (BAP) routing tables may need to be updated taking into account that the mobile base station moved away from an old DU to a new DU. In this case, the BAP routing tables can contain entries that can be active or inactive depending on the presence of the mobile base station. A parent node migration/topology adaptation strategy may be improved as follows when dealing with mobile base stations:

    ◦ When the mobile base station requests to release a backhaul (BH) link (with the old parent IAB), the BH link and BAP layer route are not released but made dormant so that they can be reestablished later faster.
    ◦ When the mobile base station requests to establish a BH link (with the new parent IAB), the BH link and BAP layer route are established if not available or are reactivated if available from a previous connection.

- To ensure that the routing tables in BAP remain relatively stable, the capability of preventing a mobile base station from becoming a parent node in the IAB can be used. This can be done by modifying the integration procedure in 3GPP TS 38.401, Section 8.12, Phase 1. Here, when the IAB mobile termination (IAB-MT) includes the IAB-node indication in the *RRCSetupComplete* message, to indicate its IAB capability, and this connection is being established over a mobile gNB node, the mobile gNB node could release such a connection request. An alternative implementation consists in including information about the type of base station in the system information broadcasted by a gNB-DU, e.g., in system information SIB1. For instance, a bit might be included in the SIB to indicate whether a base station is a mobile relay or not. The MT of a IAB might contain a policy that skips base stations that identify themselves as mobile base stations. An addition to this may be that this policy might also consider positioning information of such (mobile) base stations. E.g., if mobile base station A is moving along another mobile base station B (e.g., two buses moving one behind the other), and mobile base station A becomes aware of this positioning information (e.g., if mobile base station B discloses it in a SIB, or mobile base station A is informed by the CN), then mobile base station A might also prefer such a mobile station B as a parent IAB.

- In Section 8.9.13 in 3GPP TS 38.401, the IP address allocation for IAB-nodes is described. In the case of mobile base stations, instead of requiring the re-allocation of communication parameters every time, the IAB-node can just request the reactivation of communication parameters (e.g., IP address(es)) via RRC to the IAB-donor CU). This reactivation might also include a reactivation of mappings between internet protocol (IP) header fields and L2 parameters (e.g. BAP routing ID, BH radio link control (RLC) channels) used for downlink (DL) traffic. When an IP address is reactivated, the corresponding F1 interface can be re-enabled as well. Once the reactivation request is sent, the IAB node in the mobile base station can start communicating.

- When an IAB-MT enters an inactive state (e.g. INACTIVATE), 3GPP TS 38.401 states in Section 8.9.12 that it is up to the implementation to keep or release the F1 connection of the collocated IAB-DU. This F1 connection connects to the CU. In case a mobile base station following a given, e.g., periodic, route in which a DU will connect again and again to the same CU, the F1 connections may not be released (e.g. as described in Section 8.9.10.1 of 3GPP TS 38.401), but may remain preconfigured in the IAB-DU so that they can be rapidly activated when the MT is connected again to the same DU parent under the same CU. Similarly, the CU may store the F1 configuration so that it can be rapidly reactivated. The control part (CP) of the gNB-CU could indicate to user part (UP) of the gNB-CU over the E1 interface (connecting the CP and the UP) whether an F1 interface is active or not and whether it can or should be reactivated.

The above proposed options to improve IAB in the context of vehicle-mounted relays might not only apply to the use case of the above embodiment, but may also be independently applicable to other use cases, e.g. as described in 3GPP TR 22.839.
Fig. 4 schematically shows a signaling and processing diagram for a data distribution in a mobile edge or multi-access edge computing (MEC) environment according to an embodiment. Involved devices are a UE 10, a macro base station (gNB) 20, a CN 50 with AMF 52, CN MEC host 54 and MEC orchestrator 56, a domain name server (DN) 60 and a mobile base station (gNB) 30.

The MEC network architecture concept enables cloud computing capabilities and an IT service environment at the edge of a cellular network (e.g. 5G network) or any other network. The basic idea behind MEC is that by running applications and performing related processing tasks closer to the cellular customer, network congestion is reduced and applications perform better. MEC technology is designed to be implemented at cellular base stations or other edge nodes and enables flexible and rapid deployment of new applications and services for customers. Combining elements of information technology and telecommunications networking, MEC also allows cellular operators to open their RAN to authorized third parties, such as application developers and content providers.

In step 401 of Fig. 4, the UE 10 requests application data from the DN 60.

In step 402, the application requests the MEC orchestrator 56 to allocate MEC application/data close to the user. This might be a one-time request, or it might be a configuration request for that specific application and the UE 10. The MEC orchestrator 56 may be assumed to be within the CN 50 since it requires the allocation of resources for the given application in the mobile base stations, However, in other architectures, it could also be outside of the CN.

In step 403, the application uploads data to the MEC host 54.

In step 404, requested uploaded data is cached at the MEC host 54 of the CN 50, e.g., in the 5G core (5GC). This action might happen based on the specific request from the UE 10. This action might also happen proactively (e.g., during night) depending on the application preferences.

In step 405, the MEC orchestrator 56 checks with a corresponding 5G network function (NF), e.g., AMF 52 or SMF, a suitable mobile base station for delivering the data to the UE 10. This base station will host the MEC application/data (or Edge Application Server).

In step 406, the CN 50 (e.g. AMF 52) chooses a mobile base station (gNB) 30 based on the MEC requirements as received from the MEC orchestrator 56 and based on at least one of gNB status, positioning information, and UE position.

In step 407, the CN 50 (e.g. AMF 52) informs MEC orchestrator 56 of its selection and the MEC orchestrator 56 shares configuration data for the MEC application.

In step 408, CN 50 (e.g. AMF 52) forwards a request to the selected mobile base station (gNB) 30, through the macro base station (gNB) 20, to commission the MEC application for given configuration parameters. In particular, a local DNS server can be configured at this stage so that future UE requests are redirected to the edge application that will be hosted at the mobile base station 30. Referring to the example of Fig. 2, this may be done at location L0 and time T0.

In step 409, the MEC application/data is hosted at the mobile base station (gNB) 30.

In step 410, resource allocation is performed between the macro base station (gNB) 20 and the mobile base station (gNB) 30 to transfer the MEC application/data.

In step 411, the MEC application/data is transferred from the CN 50 (e.g. MEC host 54) to an MEC host (not shown) at the mobile base station (gNB) 30. Referring to the example of Fig. 2, this may be done at location L1 and time T1. Note that this step may require the mobile base station 30 to join the macro cell, which may involve mobility and RAN optimizations described in other embodiments.

In step 412, the MEC host at the mobile base station 30 hosts the requested application/data.

In step 413, the UE 10 requests application data from the mobile base station 30. Note that this step may require the UE 10 to join the mobile base station 30, which may involve mobility and RAN optimizations described in other embodiments.

Finally, in step 414, the requested application data is transferred to the UE 10. Referring to the example of Fig. 2, this may be done at location L3 and time T3.

In this embodiment, the UE 10 can have an active communication link with a decreased communication delay by relaying data. More specifically, an MEC application is first commissioned at the mobile base station (gNB) 30 where the data is transferred (e.g. at location L1 and time T1 of Fig. 2)) by means of the MEC infrastructure upon request of the CN 50 (where the MEC orchestrator 56 is located) based on the application request. The UE 10 accessed the MEC application mimicking an end-to-end communication architecture (e.g. at location L3 and time T3 of Fig. 2).

Fig. 5 schematically shows a block diagram of an exemplary instantiation of a mobile base station and overall system in which the data distribution procedure of Fig. 4 can be implemented.

In Fig. 5, an exemplary mobile network deployment with the mobile base station 30 includes an initial user plane function (I-UPF) that is routed by means of a UPF (using e.g. an uplink (UL) classifier (CL) or branching point (BP)). Such an I-UPF may be placed close to the access network (e.g. RAN) and may be deployed on demand in step 409 of Fig. 4 or it could be preconfigured. The communication flow can be controlled by means of the I-SMF through an N4 interface. The protocol used here may be the Packet Forwarding Control Protocol (PFCP, as described in 3GPP TS 29.244).

Furthermore, the I-SMF may control an operation of a local UPF functionality connected to the macro base station 20 via an F1 interface. The configuration of the I-SMF may be distributed from an SMF in the 5G CN 50. Furthermore, a local access DN 55 may be configured to host the edge application server (EAS) or MEC application. This is the data that the UE 10 is requesting or is going to request and is downloaded at the mobile base station 30 in step 411 of Fig. 4.

Following the flows in Figure 6.46.2-1 of 3GPP TS 23.548, a local packet data unit (PDU) session anchor (PSA) UPF (equivalent to the I-UPF of Fig. 5) can monitor the quality of service (QoS) (e.g. in the RAN). This information can be reported to a local network exposure function (NEF). This local NEF can also be deployed in step 409 in Fig. 4. The local NEF can then notify a local application function (AF) that could also be deployed in step 409 of Fig. 4. If a low QoS is reported, PSA relocation and/or EAS relocation may happen as described in section 6.3 of 3GPP TS 23.548. For instance, a first local AF might be a local AF in the 5G CN 50 that handles the delivery of data through the macro cell (i.e. macro base station 20). If this local AF notices that the QoS when downloading data as requested by the UE 10 drops, a new local AF or local NEF or local PSA can be commissioned in the mobile base station 30 to serve the needs of the UE 10. The underlying message flow may correspond to the one described, e.g., in Figure 6.3.3.3.1.1-1 of 3GPP TS 23.548. It is however noted that this situation may also trigger other actions such as a CHO as described above.

In 3GPP TS 23.548, multiple connectivity modes for edge computing in the 5G CN 50 are described including a distributed anchor point, session breakout, and multiple PDU sessions. Fig. 4 describes an approach that could fit in multiple connectivity models. In case of a distributed anchor, section 6.2.2.2 of TS 23.548 describes how the EAS discover procedure could work. For instance, the DNS request may be resolved by a DNS server (e.g. DN 60) that is close to the PSA UPF. In the case of Fig. 4, a local DNS server may be updated in step 408 and the local PSA UPF may be configured in step 411 together with the application data. In Fig. 5, the local PSA UPF is shown as the I-UPF and the application data may correspond to the EAS.

In TS 23.502, general 5GC procedures are described. Section 4.23 describes deployment topologies with specific SMF areas. This may be relevant since, in general, the AMF determines an SMF capable of serving the UE 10 and the SMF manages the corresponding UPF. In particular, section 4.23.9 describes how an BP or UL CL is established so that the downlink data comes from either UPF (PSA2) (local UPF) or UPF (PSA1) (central UPF). Taking into account this operation, step 406 of Fig. 4 could refer therefore to the choice of SMF and UPF located at a given mobile base station. In this step, a BP or UL CL can be established to steer the download of data, e.g., through a central UPF connecting to a remote DN or through a local UPF located at the mobile base station 30 where the application data or edge server or EAS has been cached on demand. The steering can be done by downloading a configuration to the SMF local to the mobile base station 30. This proposed capability applies not only to the main use case of the above embodiment, but also to other use cases, e.g. as described in 3GPP TR 22.839. For instance, it can apply to the upload of data through a mobile base station.

The above communication flow can fit to, e.g., the EAS discovery procedure with EASDF described in connection with Figure 6.2.3.2.2-1 in 3GPP TS 23.548 where there is PSA UPF in a local site, i.e., close to the UE location, and a central PSA UPF.

The logic in Fig. 4 is related to the logic in Figure 6.2.3.3-1 (EAS re-discovery procedure at Edge relocation) in 3GPP TS 23.548. However, a fundamental difference is the mobility of the mobile base station 30 that brings new possibilities, namely the relocation of the EAS to it when the mobile base station 30 is close to the UE 10. This event and the location of the mobile base station 30 may trigger the L-PSA insertion, change or removal of PDU session. This may also trigger a notification towards the AF. For performance purposes, the capabilities and rights for EAS relocation might be under the supervision of the 5G CN 50, e.g., under the supervision of the SMF. This proposed capability applies not only to the main use case of the above embodiment, but also to other use cases, e.g. as described in 3GPP TR 22.839.

Fig. 6 schematically shows a signaling and processing diagram for an example according to an embodiment without using MEC, where a downlink data is cached at a mobile base station until it can be delivered. Involved devices are a UE 10, a macro base station (gNB) 20, a CN 50 with AMF 52, a domain name server (DN) 60 and a mobile base station (gNB) 30.

The idea of this embodiment is that the downlink communication is routed through the mobile base station (gNB) 30 and the data is cached at the mobile base station 30 until it can be delivered.

In step 601, the UE 10 requests application data from the DN 60.

In step 602a, the requested application starts delivering data.

In step 602b, the macro base station 20 determines that the amount of data is big and the communication link is not sufficient and therefore the data is cached at the macro base station (gNB) 20.

In step 603, the AMF 52 checks whether there is a mobile base station (gNB) capable of delivering the data.

In step 604, if available, the AMF 52 configures a detected mobile base station (gNB) 30 in advance, e.g., when it is at location L0 of Fig. 2.

In step 605, the macro base station 20 allocates resources for data transfer to the mobile base station 30, e.g., in an IAB setting.

In step 606, data is transferred to the mobile base station 30, e.g., when it is at location L1 of Fig. 2.

In step 607, data is cached at the mobile base station 30 since the UE 10 is not connected yet.

In step 608, the UE 10 is connected and the cached data is transferred to the UE 10, e.g., when the mobile base station 30 is at location L3 of Fig. 2.

In an example, the mobile base station (gNB) 30 may include an Intermediate UPF (I-UPF) controlled by means of the N4 interface. Here, packet forwarding control protocol (PFCP) sessions, established with this UPF, may define how packets are identified (e.g. by using a packet detection rule (PDR)), forwarded (e.g. by using forwarding action rules (FARs)), processed (e.g. by using buffering action rules (BARs)), marked (e.g. by using QoS enforcement rules (QERs)) and/or reported (e.g. by using usage reporting rules (URRs)). As described in 3GPP TS 29.244, a BAR can provide instructions to control the buffering behavior of this UPF at the mobile base station. The BAR may control the buffering behavior for all FARs of the PFCP session. Specific actions are described in section 5.2.4.2 of 3GPP TS 29.244 while section 8.2.29 includes a DL buffering duration. This proposed capability applies not only to the main use case of the above embodiment, but also to other use cases, e.g. as described in 3GPP TR 22.839. For instance, it can apply to the upload of data through a mobile base station that might be cached for a certain amount of time.

In another example, multiple mobile base stations might be coordinated in this manner when delivering (DL) or receiving (UL) from a UE. Each of those mobile base stations might include an I-UPF coordinated by means of, e.g., the same SMF, e.g. as described in section 5.33.2.2 of 3GPP TS 23.501 where two N3 tunnels are transferred via disjointed transport layer paths to support redundant transmission.

In a still further example, the data transfers in steps 408 and 414 in Fig. 4 and steps 606 and 608 in Fig. 6 may be chosen to be performed at locations where the best connectivity between the macro base station 20 and the mobile base station 30 and between the UE 10 and the mobile base station is determined.

The RAN connectivity between the mobile base station (gNB) 30 and the macro base station (gNB) 20 and/or the UE 10 can be optimized based on a knowledge of the traveling route of the mobile base station 30 and the location of the UE 10.

Using the location of the macro base station (gNB) 20 and (route of) the mobile base station (gNB) 30 over time for pre-configured and/or predicted communication parameters, wherein both the mobile base station 30 and the macro base station 20 may use knowledge of their position to optimize communication parameters such as beam forming or modulation and coding scheme and/or reduce signaling overhead.

Since the mobile base station 30 may be moving fast, reporting the connection parameters (e.g., CQI)) to decide on the fly on the communication parameters to use, e.g., modulation or beam forming, may not be fast enough or may involve high signaling overhead. Even if reporting of CQI can be done at a high rate, the report may arrive with some delay. If the mobile base station 30 is moving, the communication environment and location of the mobile base station 30 may have changed already by the time the CQI report has been received and/or processed. This means that the macro base station 20 may be assigning communication parameters at time t based on outdated CQI connection parameters from an earlier time t-delta. It is therefore required to predict the actual CQI connection parameters at time t given the outdated CQI connection parameters obtained at time t-delta.

For instance, a car moving at 50km/h moves 1.38cm in 1ms and 13.8m in 1s. If the reception quality depends heavily on the location of the mobile base station 30, but this dependency does not change over time, then the historical data can be used to reduce the communication overhead and improve the selection of communication parameters.

In an example, the macro base station 20 and the mobile base station 30 may collect data about the most suitable communication settings, e.g., beam forming, or performance, e.g., CQI, based on the positioning information of the mobile base station 30. This positioning information can include the absolute location (e.g., coordinates x, y, z), its angle with respect to a reference axis (e.g., 1 degree), its speed, or its acceleration. With this information, the macro base station 20 can pre-configure and select communication parameters for different locations of the mobile base station 30. The mobile base station 30 can adjust some of its own communication parameters (e.g., its own beamforming) based on its own positioning information. The mobile base station 30 may report its positioning information to the macro base station at a given instant of time. This can be done by means of a single or multiple messages. The positioning information may be included, e.g., in an uplink reporting message, e.g., together with other data such as in the CQI message as well. It can also be done by means of a single message including the current location and a speed vector (magnitude and direction). With this information, the macro base station 20 can select the best communication parameters.

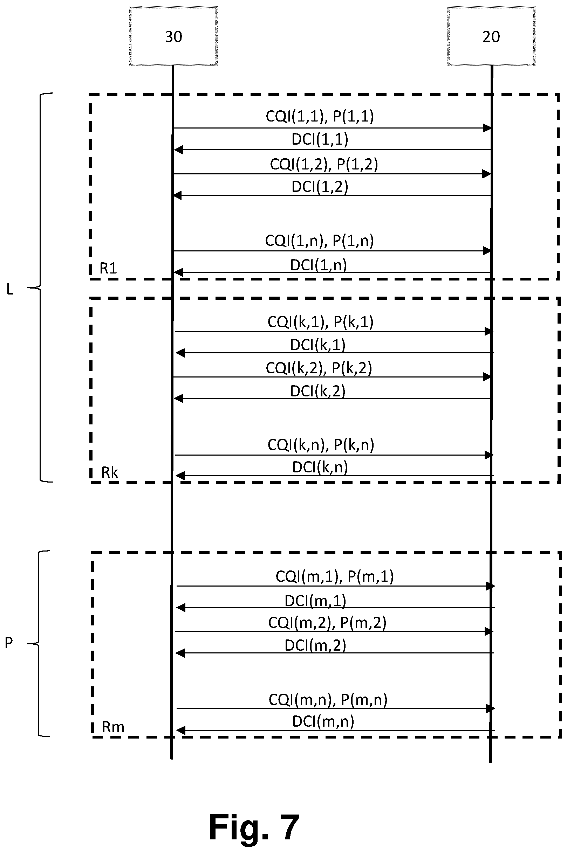

Fig. 7 schematically shows a flow diagram of a first responder network localization and mapping procedure according to various embodiments.

In order to get this operation running, the macro base station 20 may learn the route of the mobile base station (which always follows the same route) during a number of rounds, e.g., k rounds, where k is at least 1. In this learning phase L in round Rk, the mobile base station reports its connection parameters, e.g., the $CQI(k,i)$ and positioning information $P(k,i)$ for multiple locations i along the route of the mobile base station 30. The macro base station 20 will then allocate communication resources having no previous knowledge. The macro base station 20 stores this historical information. Since the mobile base station 30 reports the location, the macro base station 20 can also estimate the propagation delay of the message and its own processing delay. This means that after the learning phase L, the macro cell can have a table as follows:

| Position | CQI | Delta (delay) |
|---|---|---|
| P(0) | CQI(0) | D(0) |
| P(1) | CQI(1) | D(1) |
|  |  |  |
| P(n) | CQI(n) | D(n) |

Referring to Fig. 7, in a prediction phase P, the macro base station 20 can use the historical information and positioning information to make a better assignment of communication resources. During the prediction phase P, the macro base station 20 knows the route already and also the CQI along that route from the learning phase L. In this prediction phase in round Rm, the macro base station 20 can use the reported positioning information P(m,i) to estimate the actual position of the mobile base station 30 when the positioning information message arrives at the macro base station 20. This can be done since D(i) is known and P(m,i) can include speed information. The macro base station 20 can then look up the CQI for the entry that corresponds to the current location of the mobile base station 30. Note that additional data might influence this decision. This data might come from external sources, e.g., traffic status in the case of vehicle-mounted relays, weather, etc.

In the above example, a simple "table look up" is used to illustrate how positioning information can be used for an optimized allocation of communication resources. However, more advanced machine learning can be applied. For instance, the paper by Hao Yin et al, "Predicting Channel Quality Indicators for 5G Downlink Scheduling in a Deep Learning Approach" (August 2020) describes a related method for predicting the actual CQI value at time t based on historical data and CQI value reported by a UE at time t, that as discussed above will arrive with a certain delay, and thus, it will be outdated. This prediction is based on a long short-term memory (LSTM) algorithm. However, in that model the location and speed of the user (UE) is not used as input of the prediction algorithm used to estimate/choose communication parameters to be used between base station and UE. The reason why this input is not used is because the UE is the one assumed to be moving, and UEs can be moving at very different locations and directions. Therefore, the authors of the above paper could not assume that UEs are going to move in a repetitive fashion along the same route.

However, in the present embodiments, many mobile base stations, provided e.g. on buses or trains or satellites communicating with a fixed macro base station are going to have a fixed periodic/predictable route, and even similar speed every time as they move along such a predefined route. Thus, the current location of the mobile base station 30 and its speed vector are meaningful inputs when computing communication parameters.

Such parameters can be incorporated to, e.g., predicting channel quality indicators for downlink scheduling in a deep learning approach, by exchanging them, e.g., together with the CQI report. The positioning information might also be reported in a different way, e.g., broadcasted as part of signaling information. The input to the LSTM architecture of the above paper may not only include the last N CQI measurements, CQI(t-tau), CQI(t-tau+1),...,CQI(t-tau+N), but also the current positioning information of the mobile base station 30.

It is however noted that other machine learning algorithms, e.g., feedforward neural networks, convolutional neural networks (CNNs), etc. may also benefit from the usage of location information.

The above approach of the embodiment of Fig. 7 allows not only to improve the choice of communication resources, but can also allow reducing signaling overhead, and thus, energy consumption and bandwidth needs. For instance, during the prediction phase P, if the prediction capability is very good, the mobile base station 30 may only need to report the positioning information, and with a lower frequency. As another option, allocated resources may be deployed in advance to the mobile base station 30 by means of a semi-persistent scheduling approach in which the allocated resources are deployed by means of an RRC message.

The above proposed capabilities apply not only to the main use case of the above embodiments, but also to other use cases, e.g., as described in 3GPP TR 22.839, for instance, use cases focusing on the upload of data through a mobile base station.

Another option for optimizing the connectivity can be to select the best location for the data transfer. This selection can be done by collecting data regarding the communication quality (throughput, latency,...) from one or multiple mobile base stations along their route by keeping track of the data and by using it to select the most suitable starting time for the uplink/downlink communication between mobile base station 30 and the macro base station. As another option, the selection can be based on a propagation model, such as a basic propagation model (e.g. Free-Space or Plane Earth Loss) for macro cell prediction. Here, a total signal loss may be predicted based on knowledge of the location, dimension and parameters for every tree or building and terrain feature in the area to be covered. Alternatively, an empirical model may be used, where parameters, such as received signal strength, frequency, antenna heights and/or terrain profiles, are derived from a particular environment through the use of extensive measurement and statistical analysis and then used in environments similar to the original measurements.

It is noted that the throughput $T\_t$ for a given instant of time depends on the achieved transmission rate TR for the chosen modulation and coding scheme TR(MCS_t) and the current block error rate $B\_t$ of the transport rate, as expressed in the following equation:

$$T\_t = TR(MSC\_t)*(1-B\_t)$$

As explained above in connection with Fig. 7, the CQI for the mobile base station 30 can be predicted in advance. The predicted CQI can then be used to determine the modulation and coding scheme (MSC) to be used. Since the CQI for a location is known, it is also possible to estimate the block error rate B_t at that location.

In general, data regarding QCI, throughput, latency, signal strength, signal to noise ratio, etc. is monitored by the macro base station 20, e.g., by using feedback from the mobile base station 30. The macro base station 20 keeps track of historical data.

Fig. 8 shows characteristic curves of downlink throughput between macro base station 20 and mobile base station 30 vs. location of the mobile base station 30 based on historical data. As can be gathered from Fig. 8, data communication is feasible between positions pa1 and pa2.

This historical data can be used to select the best location for the mobile base station 30 to perform future data transfers. The selection can be based on information from a specific mobile base station or from multiple base stations.

Since the macro base station 20 and the mobile base station 30 know the amount of data to transfer and are aware of the expected transfer rate based on the historical data (and the positioning information reported by the mobile base station 30), the macro base station 20 can select the best starting time (based on the positioning data reported by the mobile base station 30) of the data transfer to finish the whole data transfer according to a given optimization goal.

The starting time to download data might be in control of different entities depending how the solution is built. An option might be to have it controlled by the CU of the macro base station 20. Another option is to control it by means of the local SMF. In this case, the SMF should receive positioning information from the different entities in the system and manage the throughput figures, as in the above curve of Fig. 8, and the corresponding optimization and scheduling.

In a first example, the macro base station 20 may aim at optimizing its overall communication resources by allocating the transfer of data between the macro base station 20 and mobile base station between locations pb1 and pb2 as shown in the middle curve of Fig. 8, i.e., around the location in which the throughput is expected to be the highest. In this way, the resources of the macro base station 20 and the mobile base station 30 are available for other communication links with other UEs or mobile base stations before and after the target data transfer. However, this comes at the price of introducing some additional latency since the transmission start only happens at position pb1, when it could have already started at pa1. We note that this decision takes into account two positions of the mobile base station 30. However, the transmission time (and thus, total amount of data to exchange) depends on the speed of the mobile base station 30. From this point of view, the curves in Fig. 8 assume that the mobile base station 30 is moving at constant speed. This also means that the choice of locations pb1 and pb2 also depends on the velocity/acceleration reported by the mobile base station 30.

However, if the macro base station 20 determines that the data transfer cannot be completed due to an excessive speed of the mobile base station 30, the macro base station 20 might command the mobile base station to adapt, e.g. reduce, its speed so that the transmission time between locations pb1 and pb2 is higher, and the whole data transfer can be completed. This feature can be used for certain types of vehicle-mounted relays, e.g., UAVs. The mobile base station 30 may also decide to adapt its speed on its own motion with the same goal. This proposed capability applies not only to the main use case in the above embodiments, but is also applicable to other use cases, e.g., as described in 3GPP TR 22.839.

The mobile base station 30 may also perform the optimization relying on external data sources such as traffic information (e.g., is there a traffic jam ahead or what is the timing of traffic lights) that may be requested from external data networks.

In a second example, an alternative optimization goal may be to minimize communication delay. This is shown in the lowest curve of Fig. 8, where the transmission of data starts at location pc1 = pa1, i.e., as soon as the mobile base station 30 is in communication range. The data transfer finishes at location pc2, i.e., pc2 < pb2, so that the end-to-end latency can be minimized since as soon as the macro base station 20 has the uploaded data from the mobile base station 30, the macro base station 20 can forward this data further towards the UE 10 (or towards the CN 50 in the case of an uplink communication). Similarly, as soon as the data is downloaded to the mobile base station 30, the mobile base station can start communicating with the UE 10.

It is further noted that in the middle and lower curves of Fig. 8 the integral of the throughput line between pb1 and pb2 equals the integral of the throughput line between pc1 and pc2, assuming that the mobile base station 30 is moving at constant speed between those locations.

Furthermore, optimized RAN connectivity between the UE 10 and the mobile base station 30 can be achieved by using the location of the UE 10 and the (route of) the mobile base station 30 over time for pre-configured and predicting communication parameters and selecting the best location for the data transfer. The optimization approaches can be similar, with the difference that now the information about the UE 10 might be less reliable.

A criterion to apply in the above approaches is about making the mobile base station 30 and the UE 10 aware of their positions before connecting and during the connection. The mobile base station 30 may need to be aware of the position of the UE 10 since then the mobile base station 30 can check historical data from previous UEs that were located at that the current UE position. The UE 10 may need to be aware of the position of the mobile base station 30 to e.g., adapt and predict which beams of the mobile base station 30 it can use during the communication.

For instance, when the mobile base station 30 has to select the best location for data transfer, the mobile base station 30 can keep historical data for the transfer of data with UEs at different locations along the route of the mobile base station 30. This can be "throughput curves" as in Fig. 8 for different locations. When the mobile base station 30 receives the request for transferring data to the UE 10 in its downlink, the mobile base station 30 may check the location of the UE 10 to select the "throughput curve" that suits the UE 10 best. This may be based on historical data, a propagation model, a combination thereof, etc. With the selected "throughput curve", the mobile base station 30 can select when data upload/download should start depending on the optimization goals, similar to the middle and lower curves of Fig. 8.

For instance, when the mobile base station 30 has to estimate the CQI of the UE 10 to select its communication parameters, the mobile base station 30 may take as input the data (e.g. current CQI data) received from the UE 10, but the mobile base station 30 may also use as input its own location and velocity vectors to predict the actual CQI of the UE 10 at the new location of the mobile base station 30.

The above embodiments enable efficient delivery of data through mobile base stations. Those embodiments are also applicable to at least some of the use cases described in 3GPP TR 22.839, e.g., to the upload of data through mobile base stations.

To this end, the network system (e.g. 5G system) may be configured to provide the following options:

- The network system may support the use of a mobile base station (relay) that provides 5G access to UEs in the vehicle along the vehicle itinerary, and/or
- the network system may provide means to ensure that UEs inside a vehicle, once provided with 5G access and connectivity via a mobile base station (e.g. mounted on the vehicle), remain connected via the mobile base station (e.g. mounted on the vehicle), and/or
- the network system may be able to provide a means to optimize cell selection and minimize unnecessary cell reselection (between mobile base stations or between mobile base stations and a fixed base station) in the presence of mobile base stations (this requirement is intended to provide the capability for the 5G system (UEs and mobile base stations) to be able to optimize selection of a mobile base station, e.g., in a vehicle where the UE is on board (or that moved together so far or that is expected to move together)), and/or
- the network system may be able to provide a means to minimize unnecessary handover (between mobile base stations, or between mobile base stations and a fixed base station) for a UE while served via an mobile base station, e.g., based on relative mobility or speed, and/or
- the network system may support providing location service for the UEs accessing to the 5GS network via a mobile base station (e.g. mounted on a vehicle), and/or
- the network system may support providing location information to a requesting UE or other location entity, for UEs accessing the 5GS network via a mobile base station (e.g. mounted on a vehicle), considering e.g. specific location granularity, and efficient UE power consumption, and/or
- the network system may be able to provide a means to perform load balancing among mobile base station relays (this requirement is intended to provide the capability for the network system (UEs and mobile base stations) to be able to optimize the load of network resources whenever possible, and/or
- the network system may be able to support efficient handover when a UE active communication changes from the macro network to a mobile base station (e.g. mounted on a vehicle) and vice versa, ensuring end-to-end service continuity during mobility of the UE (e.g. entering or leaving the vehicle) and/or the relay, and/or
- the network system may be able to support efficient handover of a UE active communication when a mobile base station (e.g. serving a UE inside a vehicle) changes between macro network nodes, ensuring end-to-end service continuity during mobility of the relay, and/or
- the network system may be able to support efficient handover of a UE active communication when a mobile base station (e.g. serving a UE outside a vehicle) changes between macro network nodes, ensuring end-to-end service continuity during mobility of the relay, and/or
- the network system may be able to support efficient handover when a UE active communication changes between mobile base stations (e.g. mounted on a vehicle), ensuring end-to-end service continuity during mobility of the UE (e.g. moving inside the vehicle).

The above options in the above use cases and other use cases described in 3GPP TR 22.839 can be addressed with the following technical solutions:

- Information, e.g., a bit being 0 or 1, is optionally included in a SIB, e.g., SIB1, to indicate whether a base station is a mobile base station (relay). By including this bit, a UE or IAB-MT can determine whether this is a cell it wants to join or not.

- A mobile base station provides positioning data, e.g., in SIB1 or on demand on a new SIB. With this information, a UE can check whether its mobility pattern fits the mobility pattern of the mobile base station.
- If a UE is connected to a mobile base station, it can request or obtain input on itinerary/timing. This can be delivered on demand as a new SIB. The SIB includes the current location of the base station as well as velocity (acceleration) vector. With this information, a UE knowing its own position can estimate how long the base station will be in range, configure communication parameters, and so on.
- An option for the SIB is to contain its current location. This might be a suitable solution if this information is included in SIB1 since it is broadcasted in a periodic manner. SIB1 is broadcasted with a periodicity of 160ms. Within this time spam, the same SIB1 is re-broadcasted multiple times, e.g., every 40ms. If a vehicle is moving at 100km/h, it will move 4.4m in 160ms. If the location of the mobile base station (gNB) is included in the SIB1, the SIB1 might include the position when a new SIB1 is broadcasted for first time and the velocity vector. With this information, if a UE receives a SIB1 that has been repeated 2 times, the UE can derive the position of the mobile base station. Other alternative might be to include the expected positions of the mobile base station for each SIB1 repetition.
- Another option is that the location information is made available on demand, e.g., by including it in a new SIB that contains the route and timing of the mobile base station. An alternative option is to include the trajectory as a function of time. For instance, the current location, velocity vector, and expiration time. With this information, a UE (or macro cell (DU/CU)) can know its location until the expiration time.
- When a UE is connecting to a mobile base station, the UE might use information about its own location to detect whether it is moving and whether its direction fits the route of the mobile base station. Only in this case, the UE will join that base station. For instance, this information can be derived from an accelerometer. This information can also allow deriving speed information. Alternatively, the UE can also request the mobile network to deliver its position, speed, and direction. The UE may also use other sensors, e.g., a GPS sensor.
- In order to allow a UE to decide in an autonomous way whether it should connect to the mobile base station or to a normal base station, the UE can run a policy that states that if it is connected to a mobile relay and it is moving according to the route of the mobile relay, then the UE should remain connected to the relay even if it sees other base stations with stronger signal.
- The above policy on a UE to decide to join a mobile base station only if it is a good candidate can also apply during handover. For instance, during CHO, the UE receives positioning information about the base station. A UE may decide to join it, only and only if it detects that it is also moving along the route of that mobile base station.
- Similarly, a UE might run a policy stating that even if a UE detects some base stations with a high received signal when processing the received synchronization signal blocks (SSBs) containing the primary synchronization signal (PSS), the secondary synchronization signal (SSS), and master information block (MIB), the UE may not change cell as long as the UE detects that it is following the route of the mobile base station it is connected to.
- In the above use cases and in other embodiments, a UE may also refer to the IAB mobile termination (IAB-MT) unit.

In another embodiment, the CN can also choose to distribute the data through two mobile base stations, e.g., if none of the base stations will be close to the UE long enough to handle all data. For instance, a base station can handle the uplink data and another base station can handle the downlink data.

From this point of view, the CN should be in charge of balancing the load on the mobile base stations based on the amount of data they can handle and also the timing and quality of the communication link that the mobile base stations can establish.

This can be achieved by providing multiple gNB-UPs, e.g. two of them. Two mobile base stations would run the gNB-UP and the macro base station can be in charge of the gNB-CP. The goal for load balancing is that the gNB-CP can balance the load distributed to both mobile base stations running the gNB-UPs. The following extensions may be required to achieve this extended architecture:

- Upon UE selection, base stations may indicate whether they support CP or UP or both (legacy) in the broadcasted system information. The UE may first join the gNB-CP. Then the UE may join at least one gNB-UP depending on its policy. A feasible split may be to have two gNB-UP in charge of uplink and downlink traffic.
- In an UE attachment signaling procedure in an NR-NR architecture, the gNB-CP may add a gNB-UP. The gNB-CP could also add more than one gNB-UP to distribute the traffic load.
- In a handover process, when performing load balancing, the gNB-CP may distribute the load between the source gNB-UP and the target gNB-UP, e.g., for the downlink, taking into account the user data to be downloaded and the positions of the source gNB-UP and the target gNB-UP.

Fig. 9 shows an example of throughput curves vs. location that a gNB-CP can expect from a source gNB-UP 1 (MBS1) and a target gNB-UP 2 (MBS2) when connecting at a UE taking into account the routes of both mobile base stations. This information can be estimated as described above e.g. in connection with Fig. 7.

As shown in the upper curve of Fig. 9, data communication at the source gNB-UP 1 (MBS1) is feasible between positions pa_s1 and pa_s2, while data communication at the target gNB-UP 2 (MBS2) is feasible between positions pa_t1 and pa_t2

In an example, load balancing can be performed by distributing the load (downlink data to be sent to the UE) between mobile gNB-UP 1 (MBS1) and mobile gNB-UP 2 (MBS2).

As shown in the lower curve of Fig. 9, data distribution is controlled so that at location pb0 the UE attaches to the gNB-CP and thereafter to gNB-UP 1 (MBS1). Then, at location pb1 data downlink transfer from gNB-UP 1 (MBS1) is started. During this first downlink transfer, the gNB-CP preconfigures in the UE the location of gNB-UP 1 (MBS1) that triggers a handover, and caches data in gNB-UP 2 (MBS2) for download to the UE when it has joined. Shortly before the location pb2 where the data download from gNB-UP 1 (MBS1) ends, the UE performs a random access procedure with gNB-UP 2 (MBS2). Then, at location pb2 data downlink transfer from gNB-UP 2 (MBS2) is started and continues until location pb3.

To summarize, an improved provision of download capability has been described for terminal devices (e.g. smart phones or IoT devices) in a network system by introducing a capability of caching requested data at mobile access devices (e.g. base stations (such as gNBs) or access points) and optimizing scheduling/transfer of data between terminal device and mobile access device and between mobile access device and macro access device.

While the invention has been illustrated and described in detail in the drawings and foregoing description, such illustration and description are to be considered illustrative or exemplary and not restrictive. The invention is not limited to the disclosed embodiments. It can be applied to various types of terminal devices, such as mobile phone, vital signs monitoring/telemetry devices, smartwatches, detectors or other type of portable device.

The terminal devices can be different types of devices, e.g. mobile phones, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, etc.

The base station may be any network access device (such as a base station, Node B (eNB, eNodeB, gNB, gNodeB, ng-eNB, etc.), access point or the like) that provides a geographical service area.

Furthermore, at least some of the above embodiments may be based on a 5G New Radio (5G NR) radio access technology.

Moreover, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff. In particular, this can be used in emergency healthcare situations, e.g., where an ambulance-mounted relay is used to improve the connectivity in the emergency area, e.g., an accident. In general IoT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Figs. 3, 4 and 6 can be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

**Claims**

1. An apparatus for controlling upload or download of transmission data in a wireless network (40), wherein the apparatus is configured to:

   - select a mobile access device (30) based on estimated location information of the mobile access device (30) and location information of a target device (10);
   - initiate caching of the transmission data at the selected mobile access device (30); and
   - schedule a transfer of the transmission data to the mobile access device (30) and a subsequent transfer of the cached transmission data from the mobile access device (30) to the target device (10) or to a core network (50) of the wireless network (50) based on the estimated location information of the mobile access device (30) and the location information of the target device (10).

2. The apparatus of claim 1, configured to upload or download the transmission data via a macro access device (20) when the mobile access device (30) is in a predetermined range of the macro access device (20).

3. The apparatus of claim 1, further configured to determine which of a plurality of mobile access devices (30) will be in a predetermined range of the target device (10) taking into account current traveling schedules of the mobile access devices (30) and to identify which of the plurality of mobile access devices (30) can deliver the transmission data to the target device (10) taking into account the position information of the target device (10) at a predetermined time, the positions of each of the plurality of mobile access devices (30) at the predetermined time, and communication requirements of a user of the target device at the predetermined time.

4. The apparatus of claim 1, further configured to inform the selected mobile access device (30) about at least one of a presence of the target device (10) along a route of the mobile access device (30), data requirements of the user of the target device (10), and a position of the target device (10), so that the selected mobile access device (30) can pre-optimize transmission parameters or pre-allocate transmission resources.

5. The apparatus of claim 1, further configured to select a suitable location of the mobile access device (30) for the transfer of the transmission data and a suitable starting time for the uplink or downlink communication between the selected mobile access device (30) and a macro access device (20) serving the target device (10).

6. A wireless communication system comprising an apparatus of claim 1 and at least one mobile access device (30).

7. The system of claim 6, wherein the mobile access device (30) is a vehicle-mounted access device configured to serve terminal devices located in the vehicle or in a predetermined range of the vehicle.

8. The system of claim 6, wherein the mobile access device (30) is configured to pre-allocate and configure communication resources for the upload or download of the transmission data taking into account at least one of a required amount of data to transfer, the position information of the target device (10), an expected trajectory of the mobile access device (30) and an expected time period during which the target device (10) or a macro access device (20) and the mobile access device (30) will be in a predetermined range.

9. The system of claim 6, wherein a core network function is configured to trigger a request for a conditional handover to the mobile access device (30) once the mobile access device (30) has been selected, or the target device (10) is configured to send a radio resource control measurement report triggering the conditional handover request, or the target device (10) is configured to send a request to trigger the conditional handover directly to a core network (50) of the wireless network (40), or the target device (10) is configured to join the mobile access device (30) if it fulfils predetermined conditions.

10. The system of claim 9, wherein the mobile access device (30) and a macro access device (20) serving the target device (10) are instances of a split between a central unit and a distributed unit, wherein the mobile access device (30) is a distributed unit and the macro access device (20) is a central unit, wherein the central unit is configured to send to the target device (10) a connection reconfiguration message including timing and conditions for moving from a source distributed unit to a target distributed unit, wherein the target device (10) is configured to include information about a data delivery status in a randon-access procedure and/or a connection reconfiguration complete message, and wherein the transmission data is cached at the target distributed unit.

11. The system of claim 6, further comprising an integrated access and backhaul, IAB, donor unit configured to create communication parameters in dependence on an estimated mobility information of the mobile access device (30), to activate the communication parameters when the mobile access device (30) is in a predetermined range of the IAB donor unit, and to put the communication parameters on hold when the mobile access device (30) is out of range of the IAB donor unit.

12. The system of claim 6, wherein the data is distributed in a mobile edge or multi-access edge computing, MEC, environment, wherein an MEC orchestrator (56) of a core network (50) of the wireless network (40) is configured to select the mobile access device (30) for delivering the transmission data to the target device (10), wherein an MEC application is first commissioned at the selected mobile access device (30) and the transmission data is transferred upon request of the MEC orchestrator (56) based on an application request from the target device (10).

13. The system of claim 6, wherein a macro access device (20) serving the target device (10) is configured to collect positioning information of the mobile access device (30) during a learning phase and to use the collected positioning information during a prediction phase to estimate an actual position of the mobile access device (30).

14. A terminal device (10) comprising an apparatus of claim 1, wherein the terminal device is configured to decide whether to connect to the mobile access device (30) based on at least one of the location information and the estimated location information.

15. A method of controlling upload or download of transmission data in a wireless network (40), wherein the method comprises:

> - selecting a mobile access device (30) based on estimated location information of the mobile access device (30) and location information of a target device (10);
> - initiating caching of the transmission data at the selected mobile access device (30); and
> - scheduling a transfer of the transmission data to the mobile access device (30) and a subsequent transfer of the cached transmission data from the mobile access device (30) to the target device (10) or to a core network (50) of the wireless network (40) based on the estimated location information of the mobile access device (30) and the location information of the target device (10).

# Fig. 1

# Fig. 2

Fig. 3

**Fig. 4**

**Fig. 5**

**Fig. 6**

**Fig. 7**

**Fig. 8**

**Fig. 9**

Europäisches
Patentamt
European
Patent Office
Office européen
des brevets

# EUROPEAN SEARCH REPORT

Application Number

EP 21 17 1430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 110 602 653 A (UNIV SCIENCE & TECHNOLOGY CHINA) 20 December 2019 (2019-12-20) * the whole document * ----- | 1-15 | INV. H04W36/32 H04W28/26 H04W40/20 |
| A | EP 3 264 827 A1 (HITACHI INT ELECTRIC INC [JP]) 3 January 2018 (2018-01-03) * column 20 - column 21; figure 7a * ----- | 1-15 | ADD. H04W84/04 H04W40/22 H04L29/08 H04W28/14 |
| A | US 9 948 380 B1 (VOS DAVID [US] ET AL) 17 April 2018 (2018-04-17) * paragraph [0020] - paragraph [0028] * * paragraph [0058] - paragraph [0083] * ----- | 1-15 | |

TECHNICAL FIELDS
SEARCHED     (IPC)

H04W
H04L

The present search report has been drawn up for all claims

| Place of search | Date of completion of the search | Examiner |
|---|---|---|
| Munich | 25 October 2021 | Koutsopoulou, E |

EPO FORM 1503 03.82 (P04C01)

## ANNEX TO THE EUROPEAN SEARCH REPORT
## ON EUROPEAN PATENT APPLICATION NO.

EP 21 17 1430

This annex lists the patent family members relating to the patent documents cited in  the above-mentioned European search report.
The members are as contained in the European Patent Office EDP file on
The European Patent Office is in no way liable for these particulars which are merely given for the purpose of information.

25-10-2021

| Patent document cited in search report | | Publication date | Patent family member(s) | | Publication date |
|---|---|---|---|---|---|
| CN 110602653 | A | 20-12-2019 | NONE | | |
| EP 3264827 | A1 | 03-01-2018 | EP | 3264827 A1 | 03-01-2018 |
| | | | JP | 6570614 B2 | 04-09-2019 |
| | | | JP | WO2016135947 A1 | 26-10-2017 |
| | | | US | 2018049110 A1 | 15-02-2018 |
| | | | WO | 2016135947 A1 | 01-09-2016 |
| US 9948380 | B1 | 17-04-2018 | US | 9948380 B1 | 17-04-2018 |
| | | | US | 10079635 B1 | 18-09-2018 |
| | | | US | 10277307 B1 | 30-04-2019 |
| | | | US | 2019222297 A1 | 18-07-2019 |
| | | | US | 2020136719 A1 | 30-04-2020 |
| | | | US | 2021058144 A1 | 25-02-2021 |
| | | | US | 2021075500 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAO YIN et al.** *Predicting Channel Quality Indicators for 5G Downlink Scheduling in a Deep Learning Approach,* August 2020